(19) Europäisches Patentamt
European Patent Office
Office européen des brevets

(11) **EP 1 386 128 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(51) Int Cl.:
*G01L 5/00* *(2006.01)*     *B60R 21/01* *(2006.01)*

(21) Anmeldenummer: **02735026.3**

(22) Anmeldetag: **04.04.2002**

(86) Internationale Anmeldenummer:
**PCT/DE2002/001232**

(87) Internationale Veröffentlichungsnummer:
**WO 2002/088652 (07.11.2002 Gazette 2002/45)**

(54) **SENSORANORDNUNG ZUR ERFASSUNG UND AUSWERTUNG VON MECHANISCHEN DEFORMATIONEN**

SENSOR ARRAY FOR DETECTING AND EVALUATING MECHANICAL DEFORMATIONS

DISPOSITIF DE DETECTION ET D'EVALUATION DE DEFORMATIONS MECANIQUES

(84) Benannte Vertragsstaaten:
**DE FR GB SE**

(30) Priorität: **26.04.2001 DE 10120457**

(43) Veröffentlichungstag der Anmeldung:
**04.02.2004 Patentblatt 2004/06**

(73) Patentinhaber: **ROBERT BOSCH GMBH**
**70442 Stuttgart (DE)**

(72) Erfinder: **STUETZLER, Frank-Jürgen**
**Farmington Hills, MI 48331 (US)**

(56) Entgegenhaltungen:
**WO-A-01/55729     DE-A- 2 212 190**

• **PATENT ABSTRACTS OF JAPAN vol. 2000, no. 08, 6. Oktober 2000 (2000-10-06) -& JP 2000 131157 A (KINUGAWA RUBBER IND CO LTD), 12. Mai 2000 (2000-05-12)**

**Beschreibung**

Stand der Technik

Die Erfindung betrifft eine Sensoranordnung, insbesondere zur Detektion mechanischer Kräfte, die beispielsweise bei einer Kollision eines Kraftfahrzeuges mit einem Hindernis zu einer Intrusion bzw. Deformation von Bauteilen an diesem Kraftfahrzeug führen, nach der Gattung des Hauptanspruchs.

Solche Sensoranordnungen werden beispielsweise bei sog. Rückhaltesystemen in Kraftfahrzeugen eingesetzt, die bei Unfällen z.B. Airbags auslösen um die Fahrzeuginsassen vor den Folgen einer Kollision zu schützen. Zur Auslösung dieser Rückhaltesysteme wird z.B. die Beschleunigung im Fahrgastinnenraum oder an peripheren Bereichen des Kraftfahrzeugs gemessen. Die peripheren Sensoren werden in der Regel zusätzlich zu dem oder den Sensoren im Fahrgastinnenraum, bevorzugt an den deformierbaren Bereichen des Fahrzeugs, eingebaut. So sind z.B. für die bessere und frühzeitige Erkennung von seitlichen Kollisionen Beschleunigungssensoren auf der sog. B- und/oder C-Säule des Fahrzeugs oder auf den Sitzquerträgern unterhalb der Vordersitze eingebaut.

In vergleichbarer Weise werden auch zur besseren Erkennung von Frontalunfällen Sensoren in die vordere Knautschzone des Fahrzeugs eingebaut, die üblicherweise ebenfalls die Beschleunigung messen und die gemessenen Werte zur besseren Bestimmung der Schwere eines Unfalles in entsprechende, elektronisch auswertbare Signale umwandeln.

Insbesondere bei seitlichen Kollisionen haben die bekannten Beschleunigungssensoren den Nachteil, dass sie eine schnelle Unfallerkennung nur dann zulassen, wenn der Sensor direkt getroffen wird. So wird beispielsweise beim Einbau auf die B-Säule des Fahrzeugs ein Pfahl-Aufprall in die Tür des Fahrzeugs zu spät erkannt. Auch für sich bekannte Drucksensoren bereiten bei einem Einbau an diesen Stellen Probleme hinsichtlich einer Trennung der Auslöse- und Nicht-Auslöse-Bedingungen, da sie z.B. bei heftigem Türzuschlagen nicht ansprechen sollen. Auch bei einer Auslösung von Fahrer- und Beifahrer Airbags dürfen diese Drucksensoren den Druckanstieg in Fahrgastinnenraum nicht als Deformation der Tür interpretieren.

Weiterhin ist bei einer Kollision die Geschwindigkeit des Eindringens des Hindernisses auch ein entscheidender Faktor, der die Schwere des Unfalls und die Verletzungsgefahr für die Insassen bestimmt. Die Eindringgeschwindigkeit ist dabei mit der Breite des Hindernisses und der Stelle des Auftreffens verknüpft. Beispielsweise dringt ein Pfahl mit einer kleinen Fläche sehr tief und schnell ein, während eine breite Barriere, die mit der gleichen Geschwindigkeit auf das Fahrzeug aufprallt, langsamer und nicht so tief eindringt. Wenn der Pfahl die Mitte der Tür trifft, so dringt er wesentlich schneller ein, als wenn er auf die B-Säule trifft. Ein Hindernis wird dabei um so langsamer eindringen, je breiter es ist und es wird um so tiefer und schneller eindringen je weicher die Stelle des Auftreffens ist.

In einer älteren nicht vorveröffentlichten Patentanmeldung DE 100 03 992.8 ist ein Prinzip eines sogenannten Kompressionsschalters beschrieben, bei dem an den ev. deformierten Bauteilen eine Anzahl Kontaktelemente vorhanden sind, die in einer möglichen Deformationsrichtung hintereinandergestaffelt in einem kompressierbaren Bauteil angeordnet sind. Durch ein durch die Deformation bewirktes Kontaktieren und/oder Entkontaktieren von benachbart angeordneten Kontaktelementen wird ein Steuersignal erzeugt, dass in einer Steuer- oder Regelanordnung, insbesondere für die eingangs erwähnten Rückhaltesysteme, auswertbar ist. Hierbei ist überwiegend vorgesehen, dass z.B. ein Schaltelement die gesamte Tür eines Kraftfahrzeuges abdeckt. Diese Realisierung ist vom Einbau her schwierig und verlangt sogar Änderungen der Konstruktion der Tür, damit der Einbau eines solchen relativ großen Elements möglich wird, was die Einsetzbarkeit gegebenenfalls einengt.

Vorteile der Erfindung

Eine eingangs erwähnte Sensoranordnung zur Detektion von Kräften, die zu einer Deformation von mechanischen Bauteilen, z.B. an Kraftfahrzeugen, führen, ist erfindunggemäß in vorteilhafter Weise dadurch weitergebildet, dass nach den Merkmalen des Hauptanspruchs an den eventuell deformierten Bauteilen, vorzugsweise an mehreren in Frage kommenden Stellen, mehrere Schaltelemente angeordnet sind. Die Schaltelemente weisen jeweils eine Anzahl Kontaktelemente auf, die in einer möglichen Deformationsrichtung hintereinandergestaffelt mit zwischenliegenden kompressiblen Isolationsschichten angeordnet sind. Die Einzel-Schaltelemente werden durch das Eindringen eines Objekts deformiert und diese Deformation wird benutzt, um bei ausreichender Deformation die Kontaktflächen der Kontaktelemente im Schaltelement miteinander in Berührung zu bringen oder Kontakte zu öffnen.

Aus dem zeitlichen Abstand des Kontaktes der verschiedenen Kontaktelemente bzw. des Öffnens verschiedener Kontakte wird die Geschwindigkeit des Eindringens bestimmt. Zuerst wird nach einer ersten Ausführungsform das obere Kontaktelement auf das mittlere gedrückt, so dass der obere Kontakt sich schließt und zwischen den an diesen Kontakten angeschlossenen Leitungen wird dieses Schließen zum Zeitpunkt $T_1$ gemessen. Dringt das Objekt weiter ein, so wird schließlich das obere und mittlere Kontaktelement auf das Basiskontaktelement gedrückt. Der Kontakt zwischen dem oberen/mittleren Kontaktelement und dem Basiskontaktelement wird zum Zeitpunkt $T_2$ geschlossen.

Die Deformations- oder Intrusionsgeschwindigkeit $V_i$ kann dann aus dem bekannten Abstand D zwischen dem mittlerem Kontaktelement und dem Basiskontaktelement und der Zeitdifferenz $T_2 - T_1$ durch $V_i = D / (T_2 - T_1)$ ermittelt werden. Die Kontaktelemente können über eine Widerstands-Schutzbeschaltung direkt an den Mikroprozessor eines Auswerte- oder Steuergerätes angeschlossen werden, das die Zeiten $T_1$ und $T_2$ direkt messen kann. Mit Widerständen parallel zu den Kontaktelementen kann dabei auf einfache Weise mit nur zwei Verbindungen zum Schaltelement das Schließen beider Kontaktelemente bestimmt werden.

Die Isolationsschichten weisen eine unterschiedliche Steifigkeit auf, wobei die äußere Isolationsschicht eine niedrige und die in der Deformationsrichtung nachfolgende Isolationsschicht eine höhere Steifigkeit aufweist. Die kompressiblen Isolationsschichten können auch aus einem nichtleitendem Schaumstoff gebildet sein, so dass mit den anliegenden Kontaktelementen ein Kondensator gebildet ist, aus dessen Veränderung der Kapazität bei der Kompression die Intrusions- oder Deformationsgeschwindigkeit herleitbar ist.

Mit der Erfindung ist in vorteilhafter Weise eine Anordnung von mehreren kleinen Einzel-Kompressions-Schaltelementen gebildet, mit denen in einfacher Weise z.B. bei einem Unfall das Eindringen eines Objekts in die Tür eines Fahrzeugs erkannt und dabei die Geschwindigkeit des Eindringens direkt bestimmt werden kann. Diese Einzel-Schaltelemente können wegen ihrer geringen Größe flexibel an verschiedene geeignete Stellen, z.B. in die Tür eines Fahrzeuges, eingebaut werden. Zum Beispiel auf das Türinnenblech auf der Höhe eines Verstärkungsrohres, unterhalb der Oberkante der Tür oder auf eine spezielle, in die Tür eingebaute Querverstrebung. Die Einzelschaltelemente werden durch das Eindringen deformiert, dabei kommen bei einer kontaktierenden Anordnung die elektrisch leitenden Kontaktelemente in Berührung und aus der Zeitdifferenz des Kontakts wird die Geschwindigkeit des Eindringens bestimmt.

Die Einzel-Schaltelemente sind dabei relativ klein, typischerweise 10 x 10 mm (Länge x Breite) und ca. 20 mm Höhe, wobei diese Maße jedoch bei Bedarf fast beliebig den sonstigen Bedingungen angepasst werden können und auf jeden Fall eine einfache Einbaubarkeit gewährleistet werden kann. Mit einem einzigen Kompressions-Schaltelement kann zum Beispiel die Eindringgeschwindigkeit von breiten Objekten, wie die bei Crashtests verwendeten beweglichen, deformierbaren Barrieren, bestimmt werden. Beim Einbau von mehreren Einzel-Schaltelementen, typischerweise 2 bis 4, verteilt auf die Breite der Fahrzeugtür, können Aufprall und Eindringen auch von kleineren Objekten erkannt werden. Werden die Einzel-Schaltelemente im oberen Teil der Fahrzeugtür eingebaut, so kann in vorteilhafter Weise auch ein Eindringen von Geländefahrzeugen und Lastkraftwagen mit relativ hohen Stoßstangen erkannt werden.

Die vorgeschlagene Schaltelemente-Anordnung kann außer zum Sensieren von Deformationen an der Fahrzeugtür zum Beispiel auch zur Frontal- oder Heck-Aufprall-Erkennung eingesetzt werden. In diesem Fall können beispielsweise ein oder mehrere Einzel-Schaltelemente zwischen der Stoßstange und der Verkleidung montiert werden. In einer solchen Konfiguration misst die Schaltelemente-Anordnung dann die Relativgeschwindigkeit des Aufpralls, die Breite des Hindernisses und den Ort des Auftreffens.

Um die eingangs erwähnten Missbrauchsbedingungen zu erkennen, muss sichergestellt werden, dass alle Kontaktelemente auch wirklich miteinander in Berührung kommen, d.h. das Schaltelement muss wirklich deformiert werden. Beispielsweise mit Hammerschlägen oder mit Türschlagen werden die Schaltelemente nicht soweit deformiert, dass beide hintereinanderliegende Kontaktelemente geschlossen werden, insbesondere wenn die Schalter an geeigneter Stelle im Innern der Tür befestigt sind. Die Missbrauchsprobleme, die bei herkömmlichen Beschleunigungs- oder Druck-Schaltern zum Teil schwerwiegend sind, werden mit der Erfindung wesentlich vermindert.

Wenn die Schaltelemente in der Nähe eines Verstärkungsrohres in Innern der Fahrzeugtür montiert werden, so wird die Sicherheit gegen Missbrauchs-Bedingungen nochmals erhöht. Die Tiefe des Einbaus in der Tür bestimmt dabei auch die Ansprechzeit bzw. die Empfindlichkeit gegen Missbrauch. Werden die Einzel-Schaltelemente unmittelbar an das Außenblech in der Tür auf spezielle Verstrebungen eingebaut, so ist die Ansprechzeit sehr gering und ein Eindringen wird sehr frühzeitig erkannt. Je weiter im Türinneren die Einzel-Schaltelemente eingebaut werden, desto später wird ein Eindringen erkannt und desto unempfindlicher sind die Schalter gegen Missbrauchs-bedingungen.

Es hat sich gezeigt, dass beispielsweise ein Abdecken der gesamten Fahrzeugtür mit Schaltelementen nicht notwendig ist, da das Außenblech der Tür genügend Stabilität besitzt und selbst beim Auftreffen von kleinen Objekten, wie zum Beispiel einem Hammer, das gesamte Außenblech der Tür eingedrückt wird. Deshalb kann ev. sogar mit nur einem kleineren Kompressions-Schaltelement in der Größenordnung von wenigen Zentimetern oder mehreren noch kleinen Kompressions-Schaltern das Auftreffen eines kleinen Objekts an anderer Stelle auf der Tür bestimmt werden.

Vorteilhaft ist insbesondere ein erfindungsgemäßes Verfahren zur Erfassung und Auswertung der mechanischen Deformationen mit unterschiedlichen Auswerteprozeduren. Soll nur die Intrusionsgeschwindigkeit bestimmt werden, so reicht es aus, alle eingebauten Schaltelemente parallel auszuwerten um die maximale Intrusionsgeschwindigkeit eines Objekts zu bestimmen. Hierzu können alle in der Tür befindlichen Einzel-Schaltelemente mit einem Unterverbindungsstecker zunächst parallel verbunden werden und dann mittels einer Leitung an ein zentrales Steuergerät angeschlossen werden. Dagegen kann mit einer Einzelauswertung der Intrusionsgeschwindigkeiten der Einzel-Schaltelernente die Bestimmung von Breite und Ort des primären Eindringens des auftreffenden Objektes auf einfache Weise ermittelt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Zeichnung

Ausführungsbeispiele der erfindungsgemäßen Sensoranordnung werden anhand der Zeichnung erläutert. Es zeigen:

Figur 1 eine schematische Darstellung einer Tür eines Kraftfahrzeuges mit einer Anzahl von Schaltelementen, die Bestandteil einer Sensoranordnung als Intrusionssensor zur Erfassung von Deformationen der Tür sind,

Figur 2 einen Schnitt durch die Fahrzeugtür nach der Figur 1,

Figur 3 ein Ausführungsbeispiel eines Schaltelementes der Sensoranordnung mit einer Anordnung von hintereinander liegenden Kontaktelementen und Isolationsschichten, bei der die Kontaktelemente durch eine Deformation nacheinander geschlossen werden und

Figur 4 ein zweites Ausführungsbeispiel mit einer Abwandlung der Anordnung von Kontaktelementen und Isolationsschichten, bei der die Kontaktelemente durch eine Deformation nacheinander geöffnet werden.

Beschreibuna der Ausführungsbeispiele

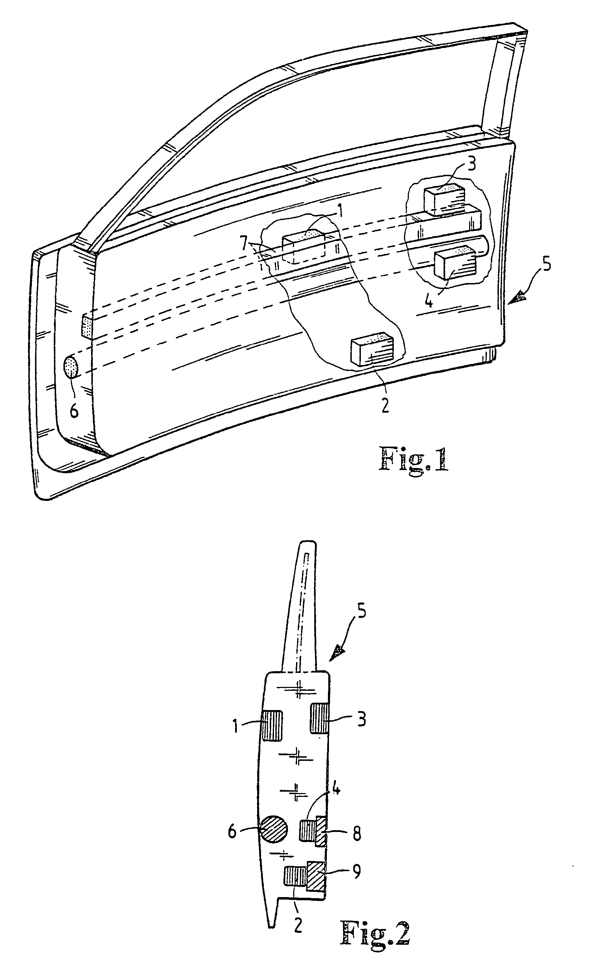

In Figur 1 ist das Prinzip einer Anordnung von Einzel-Schaltelementen 1, 2, 3 und 4 zur Realisierung einer als Intrusionssensor wirkenden Sensoranordnung in der Tür 5 eines hier nicht näher gezeigten Kraftfahrzeugs dargestellt. Beim Schnitt durch die Tür 5 nach Figur 2 ist die Lage der Schaltelemente 1 bis 4 insbesondere im Verhältnis zu Verstärkungsstrukturen im Inneren der Türverkleidung zu erkennen.

Aus den Figuren 1 und 2 ist ein ohnehin bereits vorhandenes Verstärkungselement 6 zu entnehmen. Mit weiteren zusätzlichen Verstärkungselemente 7, 8 und 9 können hier die Wirkungsweisen der Schaltelemente 1 bis 4 positiv beeinflusst werden, vor allem um die Sicherheit gegen Missbrauch zu erhöhen. Die Tiefe des Einbaus und das Zusammenwirken mit den Verstärkungsstrukturen in der Tür 5 bestimmt dabei insbesondere die Ansprechzeit bei einer äußeren Krafteinwirkung.

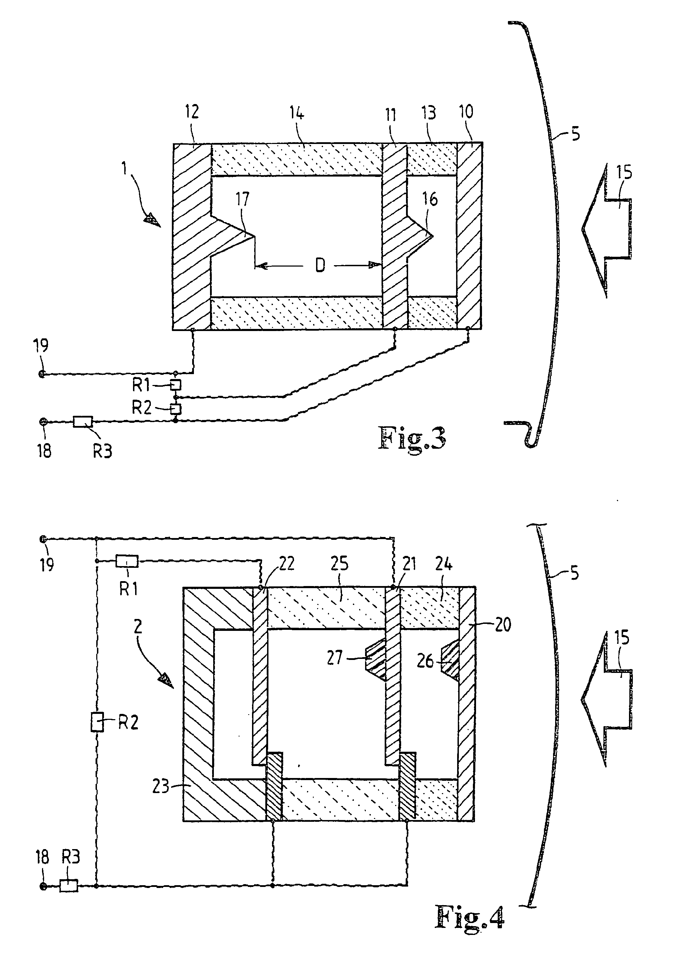

Ein Ausführungsbeispiel eines der Schaltelemente 1 bis 4 aus den Figuren 1 und 2 zum Einbau in die Tür 5 ist in Figur 3 gezeigt. Hier ist ein oberes elektrisch leitfähiges Kontaktelement 10, ein mittleres elektrisch leitfähiges Kontaktelement 11 und ein drittes elektrisch leitfähiges Kontaktelement 12 als Basiselement des Schaltelements 1 vorhanden. Zwischen den Kontaktelementen 10, 11 und 12 liegen kompressible Isolationsschichten 13 und 14, z.B. aus Schaumstoff, die die Kontaktelemente 10, 11 und 12 räumlich in einem vorgegebenen Abstand trennen, wobei hier insbesondere der Abstand D zwischen dem mittleren Kontaktelement 11 und dem Basiselement 12 für die Auswertung der Sensorsignale von Bedeutung ist.

Das kompressible Material zwischen den Kontaktelementen 10 bis 12 hat nur die Funktion einer korrekten Definition der geometrischen Abstände. Das Kompressionsverhalten des Materials ist deshalb unkritisch, ebenso ist das Temperaturverhalten der Steifigkeit des kompressiblen Materials unkritisch. Beim Aufbau der Schaltelemente 1 bis 4 ist nur darauf zu achten, dass die Steifigkeiten im Verlauf der Lebensdauer des Schaltelements nicht so hoch werden, dass eine vollständige Deformation mit dem Schließen der Kontakte des jeweiligen Schaltelements verhindert wird.

Die bei einem Unfall auftretenden Deformationskräfte sind erheblich, so dass ein korrektes Deformieren des Schaltelements in der Regel allein durch die hohen Kräfte gewährleistet ist, selbst wenn die Steifigkeit des kompressiblen Materials variieren sollte.

Das Schaltelement 1 wird bei einem Unfall beispielsweise in einer Richtung 15 verformt. Die Kontaktelemente 11 und 12 sind, ggf. mit Stegen 16 und 17 ausgestattet, so dass ein elektrischer Kontakt zwischen den Elementen 11 und 12 bei vollständiger Kompression der Isolationsschichten 13 und 14 bei einem Unfall gewährleistet ist. Das Basiselement 12 kann auch geometrisch so geformt werden, dass es in der Mitte eine Erhöhung aufweist, wobei diese Erhöhung so hoch sein sollte, dass sie höher als die Dicke des kompressiblen Materials in der Schicht 14 in vollständig komprimiertem Zustand entspricht.

Die Kontaktflächen der Kontaktelemente 10, 11 und 12 sollten an ihrer Oberfläche so behandelt sein, dass keine Korrosion stattfinden kann und das Schließen der Kontaktelemente 10, 11 und 12 auch über die gesamte Lebensdauer des Schaltelements 1 gewährleistet ist. Da die Schaltelemente 1 bis 4 in die Tür 5 oder auf die Stoßstange eines Fahrzeugs eingebaut werden, werden die Schaltelemente 1 bis 4 bevorzugt mit einer wasserdichten Ummantelung umschlossen, die eine Kompression ungehindert zulässt. Diese Ummantelung kann z.B. ein dünner Gummimantel sein, der die Schaltelemente 1 bis 4 hermetisch abschließt und eine Deformation und einen Druckausgleich bei Temperaturschwankungen zulässt.

Damit die Abfolge des Komprimierens definiert bleibt, muss die Steifigkeit des Materials in der Isolationsschicht 13 niedriger sein als im Bereich 14. Damit ist gewährleistet, dass zuerst der Kontakt zwischen dem oberen Kontaktelement 10 und dem mittleren Kontaktelement 11 geschlossen wird, bevor die Isolationsschicht 14 deformiert wird.

Wird die Tür 5 nun durch einen Aufprall eines Objekts eingedrückt, so wird das obere Kontaktelement 10 auf das mittlere Kontaktelement 11 gedrückt und damit kontaktiert, so dass über an diese Kontaktelemente angeschlossene Leitungen der Zeitpunkt $T_1$ der Kontaktierung erfasst werden kann. Das Hindernis dringt dann weiter ein und drückt schließlich das obere und das mittlere Kontaktelement 10 und 11 auf das Basiselement 12. Der Kontakt zwischen dem mittleren Kontaktelement 11 und dem Basiselement 12 wird dann zu einem Zeitpunkt $T_2$ geschlossen.

Die Intrusionsgeschwindigkeit $V_i$ des Objekts kann dann aus dem bekannten Abstand D zwischen dem mittlerem Kontaktelement 11 und dem Basiselement 12 und den Zeitpunkten $T_1$ und $T_2$ nach der Beziehung

$$V_i \;=\; D \;/\; (T_2 \,-\, T_1) \qquad\qquad (1)$$

ermittelt werden. Typischerweise beträgt der Abstand D in bei einer möglichen Ausführungsform etwa 2 cm, womit sich bei einer Geschwindigkeit von 20 m/s (entspr. 72 km/h) eine Zeitdifferenz $T_2$ - $T_1$ von 0,02/20 sec, entsprechend 1 ms, ergibt. Diese Zeitdifferenz ermöglicht sowohl eine direkte Messung durch einen Mikroprozessor in der Auswerteschaltung als auch ein schnelles Ansteuern von Aktuatoren im Fahrzeug, wie z.B. ein Airbag.

Es ist hierbei sinnvoll, wenn die Kontaktelemente 10, 11 und 12 über eine Schutzbeschaltung direkt an den Mikroprozessor der Auswerteschaltung angeschlossen werden können, der die Zeiten $T_1$ und $T_2$ direkt messen kann. Hier ist ein Widerstand $R_1$ parallel zu den Kontaktelementen 11 und 12 und ein Widerstand $R_2$ parallel zu den Kontaktelementen 11 und 10 angeordnet. Vom Kontaktelement 10 geht ein Reihenwiderstand $R_3$ zu einem Anschluss 18 und ein Anschluss 19 ist mit dem Basiselement 12 verbunden.

Somit kann bei diesem Ausführungsbeispiel mit nur zwei Verbindungen der Auswerteschaltung zum Schaltelement 1 das Schließen beider Kontakte ausgewertet werden. Falls kein Aufprall an der Tür 5 vorliegt und das Schaltelement 1 damit keine Verformungskräfte erhält ist der Gesamtwiderstand

$$R \;=\; R_1 \,+\, R_2 \,+\, R_3 \qquad (2).$$

Im Falle eines Aufpralls wird dann zunächst der obere Kontakt zwischen den Kontaktelementen 10 und 11 geschlossen. Der Gesamtwiderstand ist dann

$$R \;=\; R_1 \,+\, R_3. \qquad\qquad 3).$$

Wenn das Schaltelement 1 weiter deformiert wird und der untere Kontakt schließt, so ist der Gesamtwiderstand

$$R \;=\; R_3 \qquad (4).$$

Aus Figur 4 ist ein Ausführungsbeispiel des Schaltelements 2 zu entnehmen, bei dem eine obere Druckplatte 20 vorhanden ist. Es ist weiterhin ein mittleres Kontaktelement 21 und ein unteres Kontaktelement 22 an einer Basisplatte 23 vorhanden. Die Kontaktelemente 21 und 22 bestehen aus Teilkontaktelementen, die im Ruhezustand kontaktierend aneinander liegen. Kompressible Isolationsschichten 24 und 25 sind zwischen der Druckplatte 20 und dem Kontaktelement 21 und zwischen den Kontaktelementen 21 und 22 angebracht.

Durch Kompression der Isolationsschichten 24 und 25 bei einer Deformation des Schaltelements 2 öffnen dabei die Kontaktelemente 21 und 22. Beim Eindringen eines Objekts und der daraus resultierenden Kompression der Isolationsschichten 24 und 25 drückt die obere Druckplatte 20 auf den ersten geschlossenen Kontakt des mittleren Kontaktelements 21. Die Druckplatte 20 ist geometrisch so geformt, dass z.B. über eine elektrisch isolierende Erhebung 26 der Kontakt der mittleren Teilkontaktelemente 21 geöffnet werden kann. Wird die Sensoranordnung weiter komprimiert, so drückt das mittlere Kontaktelement 21 und eine elektrisch isolierende Erhebung 27 auf das untere Kontaktelement 22 und öffnet hier den Kontakt. Aus dem zeitlichen Abstand des Öffnens kann wiederum, wie oben erwähnt, die Intrusionsgeschwindigkeit $V_i$ bestimmt werden.

Auch hier können die Kontaktelemente 21 und 22 über eine Schutzbeschaltung direkt an den Mikroprozessor der Auswerteschaltung angeschlossen werden können, der die Zeiten $T_1$ und $T_2$ direkt messen kann. Hier ist gemäß eines Ausführungsbeispiels vom Kontaktelement 22 ein Widerstand $R_1$ an den zweiten Anschluss 19 und ein Widerstand $R_3$ an den ersten Anschluss 18 geführt, wobei ein Widerstand $R_2$ parallel zu dem Anschluss 19 und einer Seite des Kontaktelements 22 liegt. Das Kontaktelement 21 liegt mit einer Seite direkt am zweiten Anschluss 19 und mit der anderen Seite ebenfalls am Kontaktelement 22.

Wenn das Schaltelement 2 keine Verformungskräfte erhält, ist der Gesamtwiderstand

$$R = R_3 \qquad (5).$$

Im Falle eines Aufpralls wird dann zunächst der obere Kontakt am Kontaktelementen 21 geöffnet. Der Gesamtwiderstand ist dann

$$R = R_3 + R_1 * R_2 / R_1 + R_2 \qquad (6).$$

Wenn das Schaltelement 2 weiter deformiert wird und der untere Kontakt 22 öffnet, so ist der Gesamtwiderstand

$$R = R_3 + R_2 \qquad (7).$$

Bei der konkreten Ausführung der vorher beschriebenen Schaltelemente 1 bis 4 können auch andere Gestaltungsformen der Kontaktelemente und dazu passender Auswerteschaltungen vorgesehen werden. Ein Schaltelement kann beispielsweise auch an eine Auswerteschaltung angeschaltet werden, die die Zeitdifferenz $T_2 - T_1$ durch Messung der Spannung eines Kondensators während seiner Aufladung bestimmt und die diese Zeit als kodierte Information an ein Auswertegerät, z.B. an ein Airbag-Steuergerät, schickt.

Statt als Kontakt wie nach der Figur 3 kann das mittlere Kontaktelement 11 auch als eine flache Spule oder aus mehreren flachen Spulen geformt sein. Wird für das obere Kontaktelement 10 und das Basiselement 12 Material mit ferromagnetischen Eigenschaften benutzt, so kann der Kontakt der Kontaktelemente 10 bis 12 auch als Veränderung der Impedanz des als Flachspule ausgeführtem mittleren Kontaktelements 11, beispielsweise mit Hallsensoren, gemessen werden.

Die Kontaktelemente in einer Abwandlung nach der Figur 4 können auch durch zwei flächenartige Bruchkeramiken gebildet sein, die durch eine kompressible Isolationsschicht getrennt sind. Wenn die Bruchkeramiken mit einer elektrisch leitfähigen Bahn versehen sind, kann deren Unterbrechung, wie anhand der Figur 4 beschrieben, detektiert werden.

**Patentansprüche**

1. Sensoranordnung zur Detektion von Kräften, die zu einer Deformation von mechanischen Bauteilen (5) führen, bei der

   - die Sensoranordnung aus mehreren Einzelschaltelementen (1, 2, 3, 4) besteht, von denen jeweils ein Einzelschaltelement (1, 2, 3, 4) eine Anzahl Kontaktelemente (10, 11,12; 21, 22) aufweist, die in einer möglichen Deformationsrichtung (15) hintereinander gestaffelt am Bauteil (5) angeordnet sind, wobei zwischen den Kontaktelementen (10, 11, 12; 21, 22) kompressible Isolationsschichten (13, 14; 24, 25) liegen und bei der
   - die Kontaktelemente (10, 11, 12; 21, 22) mit einer elektronischen Auswerteschaltung verbunden sind, mittels der ein durch eine Deformation bewirktes Kontaktieren und/oder Entkontaktieren von benachbart angeordneten Kontaktelementen (10, 11, 12; 21, 22) erfassbar und in Steuer- und/oder Regelsignale umwandelbar ist, wobei
   - die beiden Isolationsschichten (13, 14; 24, 25) eine unterschiedliche Steifigkeit aufweisen, wobei die äußere Isolationsschicht (13; 24) eine niedrige und die in der Deformationsrichtung (15) nachfolgende Isolationsschicht (14; 25) eine höhere Steifigkeit aufweist

- die mehreren Einzelschaltelemente (1, 2, 3, 4) im Inneren von einer aus zwei Wänden gebildeten Fahrzeugtür (5) vorzugsweise im Bereich von mechanischen Verstärkungselementen (6, 7, 8, 9) angebracht sind.

2. Sensoranordnung nach Anspruch 1, wobei

- ein Kontaktelement ein Basiselement (12) darstellt und mindestens zwei Kontaktelemente (11; 22) in jeweils vorgegebenen Abständen (D) oder die mindestens zwei kompressiblen Isolationsschichten (13, 14; 24, 25) jeweils so ausgestaltet sind, dass aus den Zeitpunkten ($T_1$, $T_2$) des Kontaktierens und/oder Entkontaktierens der in Deformationsrichtung (15) hintereinander liegenden Kontaktelemente (10, 11, 12; 21, 22) die Intrusions- oder Deformationsgeschwindigkeit ($V_i$) des die Deformation verursachenden Gegenstandes herleitbar ist.

3. Sensoranordnung nach einem der vorhergehenden Ansprüche, wobei

- die kompressiblen Isolationsschichten (13, 14; 24, 25) aus einem nichtleitenden Schaumstoff gebildet sind, so dass mit den anliegenden Kontaktelementen ein Kondensator gebildet ist, aus dessen Veränderung der Kapazität bei der Kompression die Intrusions- oder Deformationsgeschwindigkeit herleitbar ist.

4. Sensoranordnung nach Anspruch 2 oder 3, wobei

- mindestens zwei Kontaktelemente (21, 22) aus Teilkontaktelementen bestehen, die im Ruhezustand kontaktierend aneinander liegen und
- die kompressiblen Isolationsschichten (24, 25) in mindestens einem Teilbereich der Oberfläche der mindestens zwei Kontaktelemente (21, 22) angeordnet sind und im jeweils verbleibenden Bereich durch Kompression der jeweiligen Isolationsschicht (24, 25) und/oder durch Verformung der jeweiligen Kontaktelemente (21, 22) ein Dekontaktieren der Teilkontaktelemente bewirkbar ist.

5. Sensoranordnung nach einem der Ansprüche 1 bis 3, wobei

- das obere Kontaktelement und das Basiskontaktelement aus einem magnetischen Material sind und das mittlere Kontaktelement eine Flachspule ist, wobei ein Kontaktieren der Kontaktelemente zu einer Änderung der Impedanz zwischen dem oberen und dem mittleren und zwischen dem mittleren und dem Basiskontaktelement führt.

6. Sensoranordnung nach einem der Ansprüche 1 bis 3, wobei

- am mittleren Kontaktelement ein oder mehrere Hallsensoren angebracht sind und
- im oberen Kontaktelement und im Basiskontaktelement Permanentmagnete vorgesehen sind, wobei die Kontaktierung von oberem und mittlerem Kontaktelement und/oder vom mittleren und vom Basiskontaktelement durch einen Kontakt der Hallsensoren mit den Permanentmagneten detektierbar ist.

7. Sensoranordnung nach Anspruch 4, wobei

- die Kontaktelemente durch zwei flächenartige Bruchkeramiken gebildet sind, die durch eine kompressible Isolationsschicht getrennt sind, und
- die Bruchkeramiken mit einer elektrisch leitfähigen Bahn versehen sind, deren Unterbrechung detektierbar ist.

8. Sensoranordnung nach einem der vorhergehenden Ansprüchen, wobei

- die Kontaktelemente (10, 11, 12; 21, 22) über ein Widerstandsnetz ($R_1$, $R_2$, $R_3$) mit der Auswerteschaltung verbunden sind.

**Claims**

1. Sensor arrangement for detecting forces which lead to deformation of mechanical components (5), in which sensor arrangement

- the sensor arrangement comprises a plurality of individual switching elements (1, 2, 3, 4), of which in each case one individual switching element (1, 2, 3, 4) has a number of contact elements (10, 11, 12; 21, 22) which are arranged staggered one behind the other on the component (5) in a possible deformation direction (15), wherein compressible insulation layers (13, 14; 24, 25) lie between the contact elements (10, 11, 12; 21, 22), and in which sensor arrangement

- the contact elements (10, 11, 12; 21, 22) are connected to an electronic evaluation circuit by means of which a contact-making operation and/or contact-breaking operation, which are/is caused by deformation, with and/or from adjacent contact elements (10, 11, 12; 21, 22) can be detected and can be converted into open-loop and/or closed-loop control signals, wherein

- the two insulation layers (13, 14; 24, 25) have a different stiffness, wherein the outer insulation layer (13; 24) has a low stiffness and the insulation layer (14; 25) which follows it in the deformation direction (15) has a higher stiffness,

- the plurality of individual switching elements (1, 2, 3, 4) are fitted in the interior of a vehicle door (5) which is formed from two walls, preferably in the region of mechanical reinforcement elements (6, 7, 8, 9) .

2. Sensor arrangement according to Claim 1, wherein

- a contact element represents a base element (12) and at least two contact elements (11; 22), at in each case predefined distances (D), or the at least two compressible insulation layers (13, 14; 24, 25) are in each case designed such that the intrusion or deformation rate ($V_i$) of the object which causes the deformation can be derived from the times ($T_1$, $T_2$) at which contact is made with and/or contact is broken from the contact elements (10, 11, 12; 21, 22) which are situated one behind the other in the deformation direction (15).

3. Sensor arrangement according to either of the preceding claims, wherein

- the compressible insulation layers (13, 14; 24, 25) are formed from a non-conductive foam, so that a capacitor is formed with the applied contact elements, it being possible to derive the intrusion or deformation rate from the change in capacitance of the said capacitor during the compression operation.

4. Sensor arrangement according to Claim 2 or 3, wherein

- at least two contact elements (21, 22) are composed of partial contact elements which are in contact with one another in the inoperative state, and

- the compressible insulation layers (24, 25) are arranged in at least one subregion of the surface of the at least two contact elements (21, 22) and contact with the partial contact elements can be broken in the respectively remaining region by compression of the respective insulation layer (24, 25) and/or by deformation of the respective contact elements (21, 22).

5. Sensor arrangement according to one of Claims 1 to 3, wherein

- the upper contact element and the base contact element are composed of a magnetic material, and the central contact element is a flat coil, wherein a contact-making operation with the contact elements leads to a change in the impedance between the upper and the central contact element and between the central and the base contact element.

6. Sensor arrangement according to one of Claims 1 to 3, wherein

- one or more Hall sensors are fitted to the central contact element, and

- permanent magnets are provided in the upper contact element and in the base contact element, wherein the process of contact being made with the upper and the central contact element and/or with the central and with the base contact element by a contact of the Hall sensors can be detected by the permanent magnets.

7. Sensor arrangement according to Claim 4, wherein

- the contact elements are formed by two sheet-like fractured pieces of ceramic which are separated by a compressible insulation layer, and

- the fractured pieces of ceramic are provided with an electrically conductive track, it being possible to detect interruption of the said electrically conductive track.

8. Sensor arrangement according to one of the preceding claims, wherein

   - the contact elements (10, 11, 12; 21, 22) are connected to the evaluation circuit by means of a resistance network ($R_1$, $R_2$, $R_3$).

## Revendications

1. Ensemble de détecteurs destiné à détecter des forces qui entraînent une déformation de composants mécaniques (5),
   l'ensemble de détecteurs étant constitué de plusieurs éléments distincts de commutation (1, 2, 3, 4), chaque élément distinct de commutation (1, 2, 3, 4) présentant plusieurs éléments de contact (10, 11, 12; 21, 22) disposés sur le composant (5) les uns derrière les autres dans une direction (15) de déformation possible, des couches isolantes compressibles (13, 14; 24, 25) étant situées entre les éléments de contact (10, 11, 12; 21, 22),
   les éléments de contact (10, 11, 12; 21, 22) sont reliés à un circuit électronique d'évaluation au moyen duquel la mise en contact et/ou la rupture du contact entre des éléments de contact (10, 11, 12; 21, 22) voisins suite à une déformation peuvent être détectés et convertis en signaux de commande et/ou de régulation,
   les deux couches isolantes (13, 14; 24, 25) présentent des rigidités différentes, la couche isolante extérieure (13; 24) présentant une rigidité basse et la couche isolante (14; 25) qui la suit dans la direction de déformation (15) une rigidité plus élevée et
   les différents éléments distincts de commutation (1, 2, 3, 4) sont placés à l'intérieur d'une porte (5) de véhicule, formée de deux parois, de préférence au niveau d'éléments mécaniques de renfort (6, 7, 8, 9).

2. Ensemble de détecteurs selon la revendication 1, dans lequel
   un élément de contact représente un élément de base (12) et au moins deux éléments de contact (11; 22) sont réalisés à des distances prédéterminées (D) ou les deux ou plusieurs couches isolantes compressibles (13, 14; 24, 25) sont configurées de telle sorte que la vitesse d'intrusion ou de déformation ($V_i$) de l'objet qui provoque la déformation puisse être déduite des instants ($T_1$, $T_2$) de la mise en contact et/ou de la rupture du contact entre les éléments de contact (10, 11, 12; 21, 22) situés les uns derrière les autres dans la direction de déformation (15).

3. Ensemble de détecteurs selon l'une des revendications précédentes, dans lequel les couches isolantes compressibles (13, 14; 24, 25) sont formées d'une mousse non conductrice de manière à former un condensateur avec les éléments de contact adjacents, la modification de la capacité du condensateur lors de la compression permettant de déduire la vitesse d'intrusion ou de déformation.

4. Ensemble de détecteurs selon les revendications 2 ou 3, dans lequel au moins deux éléments de contact (21, 22) sont constitués d'éléments partiels de contact qui reposent l'un contre l'autre avec contact à l'état de repos, les couches isolantes compressibles (24, 25) étant disposées dans au moins une partie de la surface des deux ou plusieurs éléments de contact (21, 22) et une rupture du contact entre les éléments partiels de contact pouvant résulter dans la partie restante de la compression de la couche isolante (24, 25) concernée et/ou de la déformation des éléments de contact (21, 22) concernés.

5. Ensemble de détecteurs selon l'une des revendications 1 à 3, dans lequel l'élément de contact supérieur et l'élément de contact de base sont réalisés en un matériau magnétique et l'élément de contact central est une bobine plane, un contact entre les éléments de contact entraînant une modification de l'impédance entre l'élément de contact supérieur et l'élément de contact central et entre l'élément de contact central et l'élément de contact de base.

6. Ensemble de détecteurs selon l'une des revendications 1 à 3, dans lequel un ou plusieurs détecteurs de Hall sont placés sur l'élément central de contact et des aimants permanents sont prévus dans l'élément de contact supérieur et l'élément de contact de base, la mise en contact de l'élément de contact supérieur avec l'élément de contact central et/ou de l'élément de contact central avec l'élément de contact de base pouvant être détectée par le contact des détecteurs de Hall avec les aimants permanents.

7. Ensemble de détecteurs selon la revendication 4, dans lequel les éléments de contact sont formés de deux céramiques ruptibles de type plat séparées par une couche isolante compressible, les céramiques ruptibles étant dotées d'une piste électriquement conductrice dont la rupture peut être détectée.

8. Ensemble de détecteurs selon l'une des revendications précédentes, dans lequel les éléments de contact (10, 11, 12; 21, 22) sont reliés au circuit d'évaluation par un réseau de résistances ($R_1$, $R_2$, $R_3$) .

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10003992